# EUROPEAN PATENT APPLICATION

(11) **EP 2 647 501 A1**
(43) Date of publication of application: **09.10.2013**
(21) Application number: 11844299.5
(22) Date of filing: 22.11.2011
(51) Int. Cl.: B32B 27/36, B29C 49/02, B32B 27/40

(54) **LAMINATE FOR STRETCH MOLDING AND STRETCHED LAMINATE OBTAINED USING SAME**

(30) Priority: 29.11.2010 JP 2010265267
(71) Applicant: Kureha Corporation, Chuo-ku Tokyo 103-8552 (JP)
(72) Inventor: SHIMADA Ken'ichiro, Tokyo 103-8552 (JP); KATO Ryo, Tokyo 103-8552 (JP); TAKAHASHI Shinya, Tokyo 103-8552 (JP); SATO Takashi, Tokyo 103-8552 (JP)
(74) Representative: HOFFMANN EITLE
(86) International application number: PCT/JP2011/076939
(87) International publication number: WO 2012/073764

(57) **Abstract**

A laminate for stretch-forming includes: a polyglycolic acid-based resin layer containing 100 parts by mass of a polyglycolic acid-based resin and 0.5 parts by mass or more and 10 parts by mass or less of at least one thermoplastic elastomer selected from the group consisting of polyester-based thermoplastic elastomers and polyurethane-based thermoplastic elastomers; and a thermoplastic resin layer adjacent to the polyglycolic acid-based resin layer, as well as a stretched laminate is obtained by stretching the same.

## Description

### [Technical Field]

The present invention relates to a laminate for stretch-forming including a polyglycolic acid-based resin layer and to a stretched laminate obtained by stretching the same.

### [Background Art]

Polyglycolic acid is excellent in microbial degradability and hydrolyzability, and hence has attracted attention as a biodegradable polymer material having a reduced load on the environment. In addition, polyglycolic acid is excellent in gas-barrier properties, heat resistance, and mechanical strength. A multilayer hollow container (for example, Japanese Unexamined Patent Application Publication No. Hei 10-138371 (PTL 1)) and laminated films (Japanese Unexamined Patent Application Publication No. 2005-169978 (PTL 2) and Japanese Unexamined Patent Application Publication No. 2008-221733 (PTL 3)), which take such advantage of polyglycolic acid, have been proposed.

However, in some multilayer hollow containers or some laminates, depending on the kind of a thermoplastic resin layer adjacent to a layer made of the polyglycolic acid-based resin, delamination (interlayer peeling) is caused by impact between the layer made of the polyglycolic acid-based resin and the thermoplastic resin layer.

### [Citation List]

### [Patent Literature]

[PTL 1] Japanese Unexamined Patent Application Publication No. Hei 10-138371
[PTL 2] Japanese Unexamined Patent Application Publication No. 2005-169978
[PTL 3] Japanese Unexamined Patent Application Publication No. 2008-221733

### [Summary of Invention]

### [Technical Problem]

The present invention has been made in view of the above-described problem of the conventional technologies, and an object of the present invention is to provide a stretched laminate including a polyglycolic acid-based resin layer and a thermoplastic resin layer adjacent thereto and being excellent in resistance to delamination caused by impact, as well as a laminate for stretch-forming for obtaining the stretched laminate.

### [Solution to Problem]

The present inventors have conducted earnest study to achieve the above-object. As a result, the present inventors have found that a stretched laminate has an excellent resistance to delamination caused by impact, when the stretched laminate is obtained by stretching a laminate for stretch-forming including a polyglycolic acid-based resin layer and a thermoplastic resin layer adjacent thereto, wherein the polyglycolic acid-based resin layer is formed of a polyglycolic acid-based resin composition containing a polyglycolic acid-based resin and a specific thermoplastic elastomer at a predetermined ratio. This finding has led to the completion of the present invention.

Specifically, a laminate for stretch-forming of the present invention comprises:
a polyglycolic acid-based resin layer containing 100 parts by mass of a polyglycolic acid-based resin, 0.5 parts by mass or more and 10 parts by mass or less of at least one thermoplastic elastomer selected from the group consisting of polyester-based thermoplastic elastomers and polyurethane-based thermoplastic elastomers, and, if necessary, 0.001 parts by mass or more and 10 parts by mass or less of boron nitride particles; and
a thermoplastic resin layer adjacent to the polyglycolic acid-based resin layer.

In such a laminate for stretch-forming, the thermoplastic elastomer preferably has a Shore D hardness of 60 or less. Moreover, the thermoplastic resin layer is preferably made of at least one resin selected from the group consisting of polyester-based resins, polyolefin-based resins, polystyrene-based resins, polyvinyl chloride-based resins, polyvinylidene chloride-based resins, polyurethane-based resins, ethylene-vinyl alcohol-based resins, (meth)acrylic acid-based resins, nylon-based resins, sulfide-based resins, and polycarbonate-based resins.

Moreover, in the laminate for stretch-forming of the present invention, the polyglycolic acid-based resin layer and the thermoplastic resin layer are preferably obtained by co-extrusion forming or co-injection forming.

A stretched laminate of the present invention is obtained by performing a stretching treatment on such a laminate for stretch-forming.

### [Advantageous Effects of Invention]

The present invention makes it possible to obtain a stretched laminate including a polyglycolic acid-based resin layer and a thermoplastic resin layer adjacent thereto and being excellent in resistance to delamination caused by impact, as well as a laminate for stretch-forming for obtaining the stretched laminate.

### [Description of Embodiments]

Hereinafter, the present invention will be described in detail on the basis of preferred embodiments thereof.

A laminate for stretch-forming of the present invention comprises:
a polyglycolic acid-based resin layer (hereinafter referred to as "PGA-based resin layer") containing a polyglycolic acid-based resin (hereinafter referred to as "PGA-based resin") and at least one thermoplastic elastomer selected from the group consisting of polyester-based thermoplastic elastomers (hereinafter abbreviated as "TPEE"s) and polyurethane-based thermoplastic elastomers (hereinafter abbreviated as "TPUE"s) at a predetermined ratio; and
a thermoplastic resin layer adjacent to the PGA-based resin layer. Moreover, the PGA-based resin layer may contain a nucleating agent such as boron nitride particles, if necessary.

Such a laminate for stretch-forming can be produced by using a thermoplastic resin and a polyglycolic acid-based resin composition (hereinafter referred to as "PGA-based resin composition") containing the PGA-based resin and the thermoplastic elastomer (TPEE and/or TPUE) at a predetermined ratio.

In addition, a stretched laminate of the present invention is obtained by performing a stretching treatment on such a laminate for stretch-forming.

### (PGA-based resin)

First, the PGA-based resin used in the present invention is described. Examples of the PGA-based resin include glycolic acid homopolymers (hereinafter referred to as "PGA homopolymers", the PGA homopolymers including ring-opening polymers of glycolide, which is a cyclic ester derived from two molecules of glycolic acid) constituted of only the glycolic acid repeating unit represented by the following formula (1):

-[O-CH₂-C(=O)]- (1) ;

polyglycolic acid copolymers (hereinafter referred to as "PGA copolymers") having the glycolic acid repeating unit; and the like. These PGA-based resins may be used alone or in combination of two or more kinds.

Examples of comonomers used with a glycolic acid monomer in the production of the PGA copolymer include cyclic monomers such as ethylene oxalate (i.e., 1,4-dioxane-2,3-dione), lactides, lactones (for example, β-propiolactone, β-butyrolactone, β-pivalolactone, γ-butyrolactone, δ-valerolactone, β-methyl-δ-valerolactone, ε-caprolactone, and the like), carbonates (for example, trimethylene carbonate and the like), ethers (for example, 1,3-dioxane and the like), ether esters (for example, dioxanone and the like), and amides (ε-caprolactam and the like); hydroxycarboxylic acids such as lactic acid, 3-hydroxypropanoic acid, 3-hydroxybutanoic acid, 4-hydroxybutanoic acid, and 6-hydroxycaproic acid, as well as alkyl esters thereof; substantially equimolar mixtures of an aliphatic diol such as ethylene glycol or 1,4-butanediol with an aliphatic dicarboxylic acid such as succinic acid or adipic acid, or an alkyl ester thereof. These comonomers may be used alone or in combination of two or more kinds. Of these comonomers, hydroxycarboxylic acids are preferable from the viewpoint of heat resistance.

Examples of a catalyst used when the PGA-based resin is produced by ring-opening polymerization of glycolide include known ring-opening polymerization catalysts including tin-based compounds such as tin halides and organic tin carboxylates; titanium-based compounds such as alkoxy titanates; aluminum-based compounds such as alkoxy aluminums; zirconium-based compounds such as zirconium acetylacetonate; and antimony-based compounds such as antimony halides and antimony oxides.

The PGA-based resin can be produced by a conventionally known polymerization method. A temperature for the polymerization is preferably 120 to 300°C, more preferably 130 to 250°C, particularly preferably 140 to 240°C, and most preferably 150 to 230°C. If the polymerization temperature is lower than the lower limit, the polymerization tends to proceed insufficiently. Meanwhile, if the polymerization temperature exceeds the upper limit, the produced resin tends to be pyrolyzed.

Meanwhile, a time for the polymerization of the PGA-based resin is preferably 2 minutes to 50 hours, more preferably 3 minutes to 30 hours, and particularly preferably 5 minutes to 20 hours. If the polymerization time is less than the lower limit, the polymerization tends to proceed insufficiently. Meanwhile, if the polymerization time exceeds the upper limit, the produced resin tends to be colored.

The content of the glycolic acid repeating unit represented by the above-described formula (1) in the PGA-based resin used in the present invention is preferably 70% by mass or more, more preferably 80% by mass or more, further preferably 90% by mass or more, and particularly preferably 100% by mass. If the content of the glycolic acid repeating unit is less than the lower limit, gas-barrier properties of the obtained laminate for stretch-forming and stretched laminate (especially, the PGA-based resin layer) tend to deteriorate.

The weight average molecular weight of the PGA-based resin is preferably 3×10⁴ to 80×10⁴ and more preferably 5×10⁴ to 50×10⁴. If the weight average molecular weight of the PGA-based resin is less than the lower limit, the mechanical strengths of the obtained laminate for stretch-forming and stretched laminate (especially the PGA-based resin layer) tend to be lowered. Meanwhile, if the weight average molecular weight exceeds the upper limit, it tends to be difficult to perform melt extrusion or injection molding. Note that the weight average molecular weight is a value determined by gel permeation chromatography (GPC) with respect to polymethyl methacrylate.

In addition, the PGA-based resin has a melt viscosity (temperature: 270°C, shear rate: 122 sec⁻¹) of preferably 50 to 3000 Pa·s, more preferably 100 to 2000 Pa·s, and particularly preferably 100 to 1000 Pa·s. If the melt viscosity is less than the lower limit, the mechanical strengths of the obtained laminate for stretch-forming and stretched laminate (especially the PGA-based resin layer) tend to be lowered. Meanwhile, if the melt viscosity exceeds the upper limit, it tends to be difficult to perform melt extrusion or injection molding.

### (Thermoplastic Elastomer)

Next, the thermoplastic elastomer used in the present invention is described. The thermoplastic elastomer used in the present invention is at least one thermoplastic elastomer selected from the group consisting of polyester-based thermoplastic elastomers (TPEEs) and polyurethane-based thermoplastic elastomers (TPUEs). The addition of TPEE and/or TPUE to the PGA-based resin makes it possible to obtain a stretched laminate which is transparent and excellent in resistance to delamination caused by impact.

Examples of the TPUE include known TPUEs such as polyester-type TPUEs and polyether-type TPUEs. Meanwhile, examples of the TPEE include known TPEEs such as block copolymers containing as a hard segment an aromatic polyester unit such as a polybutylene terephthalate unit and as a soft segment an aliphatic polyether unit or an aliphatic polyester unit.

The thermoplastic elastomer has a Shore D hardness of preferably 60 or less, more preferably 50 or less, and particularly preferably 45 or less. If the Shore D hardness of the thermoplastic elastomer exceeds the upper limit, it tends to be impossible to sufficiently prevent occurrence of delamination caused by impact. The lower limit of the Shore D hardness is not particularly limited, but is preferably 20 or more. Note that the Shore D hardness is measured according to JIS K7215 by using a Type D durometer.

The content of the thermoplastic elastomer in the PGA-based resin composition used in the present invention is 0.5 parts by mass or more and 10 parts by mass or less relative to 100 parts by mass of the PGA-based resin. If the content of the thermoplastic elastomer is less than 0.5 parts by mass, occurrence of delamination caused by impact (especially occurrence of delamination caused by impact applied with a sharp hammer) cannot be sufficiently prevented. Meanwhile, if the content of the thermoplastic elastomer exceeds 10 parts by mass, gas-barrier properties of the PGA-based resin layer deteriorate remarkably. Hence, from the viewpoint that the occurrence of delamination caused by impact is surely prevented, the content of the thermoplastic elastomer is preferably 1 part by mass or more. In particular, the content is more preferably 2 parts by mass or more when the Shore D hardness of the thermoplastic elastomer is 25 or more and less than 35; the content is more preferably 4 parts by mass or more when the Shore D hardness is 35 or more and less than 45; and the content is more preferably 5 parts by mass or more when the Shore D hardness is 45 or more. On the other hand, from the viewpoint that the gas-barrier properties of the PGA-based resin layer are maintained, the content of the thermoplastic elastomer is preferably 9 parts by mass or less. In particular, the content is more preferably 6 parts by mass or less when the Shore D hardness of the thermoplastic elastomer is 25 or more and less than 35; the content is more preferably 7 parts by mass or less when the Shore D hardness is 35 or more and less than 45; and the content is more preferably 8 parts by mass or less when the Shore D hardness is 45 or more.

### (Nucleating agent)

The PGA-based resin layer according to the present invention preferably further contains a nucleating agent such as boron nitride particles, if necessary. This makes it possible to more surely prevent occurrence of delamination caused by impact in the stretched laminate. The content of the nucleating agent is preferably 0.001 parts by mass or more and 10 parts by mass or less, and more preferably 0.005 parts by mass or more and 1 part by mass or less, relative to 100 parts by mass of the PGA-based resin. When the content of the nucleating agent is within the above-described range, a stretched laminate can be obtained which is transparent and excellent in resistance to delamination caused by impact. On the other hand, if the content of the nucleating agent exceeds the upper limit, the resistance to delamination caused by impact tends to deteriorate, or the haze tends to increase.

The nucleating agent used in the present invention has an average particle diameter of preferably 0.10 to 100 µm, more preferably 0.15 to 50 µm, particularly preferably 0.20 to 40 µm, and most preferably 0.25 to 10 µm. When the average particle diameter of the nucleating agent is within the above-described range, a stretched laminate can be obtained which is transparent and excellent in resistance to delamination caused by impact.

### (Other additives)

To the PGA-based resin composition used in the present invention, each of additives such as a heat stabilizer, an end-capping agent, a plasticizer, a heat ray absorber, and an ultraviolet absorber, as well as another thermoplastic resin, may be added, as long as the effects of the present invention are not impaired.

### (PGA-based Resin Composition)

The PGA-based resin composition used in the present invention can be obtained by mixing together the PGA-based resin, at least one thermoplastic elastomer selected from the group consisting of TPEEs and TPUEs, and, if necessary, the nucleating agent and the other additive. A method for preparing the PGA-based resin composition is not particularly limited, but the PGA-based resin composition can be prepared by, for example, dry blending the components, and then melt kneading the blend by using an extruder or a kneader.

### (Thermoplastic Resin)

Examples of the thermoplastic resin used in the present invention include polyester-based resins such as polyethylene terephthalate and polylactic acid, polyolefin-based resins such as polyethylene, polypropylene, and ethylene·propylene copolymers, polystyrene-based resins such as polystyrene and styrene·butadiene copolymers, polyvinyl chloride-based resins, polyvinylidene chloride-based resins, polyurethane-based resins, ethylene·vinyl alcohol-based resins, (meth)acrylic acid-based resins, nylon-based resins, sulfide-based resins, polycarbonate-based resins, and the like. These thermoplastic resins may be used alone or in combination of two or more kinds. Of these thermoplastic resins, polyester-based resins are preferable, aromatic polyester-based resins in which at least one of the diol unit and the dicarboxylic acid unit is an aromatic compound unit are more preferable, and aromatic polyester-based resins which are obtained from an aromatic dicarboxylic acid are particularly preferable, from the viewpoint that a stretched laminate can be obtained which has both desirable transparency and desirable gas-barrier property at satisfactory levels, which depend on the application.

### <Laminate for Stretch-forming>

The laminate for stretch-forming of the present invention includes the PGA-based resin layer containing the PGA-based resin and the thermoplastic elastomer, and the thermoplastic resin layer adjacent to the PGA-based resin layer. The laminate for stretch-forming can be produced by using the PGA-based resin composition and the thermoplastic resin. Hence, the composition of the PGA-based resin layer in the laminate for stretch-forming of the present invention is the same as that of the PGA-based resin composition.

The thickness of the laminate for stretch-forming of the present invention is not particularly limited, but is generally about 2 to 10 mm, when the laminate for stretch-forming is a bottle preform. In such a laminate for stretch-forming, the thickness of the PGA-based resin layer is not particularly limited, but set depending mainly on required gas-barrier properties of the stretched laminate. The thickness is preferably 1 to 10% relative to the entire thickness of the laminate for stretch-forming (the percentage is almost equal to the percentage by mass). If the thickness of the PGA-based resin layer exceeds the upper limit, blow molding tends to be difficult.

In addition, a haze of the laminate for stretch-forming of the present invention is not particularly limited. When measured for a laminate for stretch-forming having a thickness of 4.0 mm, the haze is preferably 40% or higher. If the haze of the laminate for stretch-forming is lower than the lower limit, the haze of the obtained stretched laminate is sometimes not lowered sufficiently in a case where heating is insufficient during stretching. Here, an upper limit of the haze of the laminate for stretch-forming is not particularly limited, but is preferably 99% or lower.

A method for producing the laminate for stretch-forming of the present invention is not particularly limited. The laminate is preferably produced by coextruding or co-injecting the PGA-based resin composition and the thermoplastic resin, from the viewpoint that the PGA-based resin layer is adjacent to the thermoplastic resin layer. A method for the co-extrusion or co-injection is not particularly limited, but a known method can be employed.

Typical examples of the laminate for stretch-forming obtained by such co-extrusion forming or co-injection forming include bottle preforms, and preforms for multilayer stretch-forming such as hollow container preforms.

### <Stretched Laminate>

Next, the stretched laminate of the present invention is described. The stretched laminate of the present invention is obtained by performing a stretching treatment on the above-described laminate for stretch-forming of the present invention. The stretched laminate is obtained by co-stretching the PGA-based resin layer containing the PGA-based resin (ordinarily, crystallized one) and the thermoplastic elastomer according to the present invention with the thermoplastic resin layer. Since the PGA-based resin layer in the stretched laminate contains the predetermined amount of the specific thermoplastic elastomer, delamination caused by impact is less likely to occur between the PGA-based resin layer and the thermoplastic resin layer adjacent thereto. Typical examples of the stretched laminate include bottles and multilayer stretch-formed containers such as hollow containers.

The thickness of the stretched laminate of the present invention is not particularly limited. When the stretched laminate is a bottle, the thickness is generally about 100 to 5000 µm. In the stretched laminate, the thickness of the PGA-based resin layer is not particularly limited, but is preferably 1 to 10% relative to the entire thickness of the stretched laminate (the percentage is almost equal to the percentage by mass).

The stretching treatment is not particularly limited, but examples thereof include known stretching methods such as blow molding. In addition, the stretching treatment may be uniaxial stretching or biaxial stretching. The stretching ratio is not particularly limited, but is generally 2 or more, and preferably 4 to 25, in terms of area ratio. Note that, by performing such a stretching treatment, a stretched laminate can be obtained which has a low haze and an excellent transparency. The haze of the stretched laminate of the present invention is not particularly limited. When measured for a stretched laminate having a thickness of 300 µm, the haze is preferably 0.1 to 10%, more preferably 0.5 to 7%, further preferably 0.8 to 5%, and particularly preferably 1 to 3%.

### [Examples]

Hereinafter, the present invention will be described more specifically on the basis of Examples and Comparative Examples. However, the present invention is not limited to Examples below. Note that characteristics of laminates for stretch-forming (three-layer preforms) and stretched laminates (bottles) obtained in Examples and Comparative Examples were evaluated by the following methods.

### <Haze>

A flat surface was cut out from a body portion of a bottle, and then measured by use of a haze meter ("TCH-III-DP" manufactured by Tokyo Denshoku. Co., Ltd.), with an inside surface thereof facing incident light.

### <Resistance to Delamination>

A bottle was filled with carbonated water at 4.2 atm, capped, left at 23°C for 24 hours, and then subjected to a pendulum impact test. Observation was made as to whether or not delamination caused by impact occurred between the outer PET layer and the crystallized PGA resin layer. The impact test was conducted on 20 bottles, and the number of bottles in which no delamination caused by impact occurred was counted. Note that two types of the pendulum impact test were carried out in one of which a round hammer having round edges at an end portion was used and in the other of which a sharp hammer having acute edges was used.

### <Oxygen Gas Permeability Coefficient>

A PGA layer was obtained by peeling off layers from a stretched laminate. The oxygen gas permeability of the PGA layer was measured by using an oxygen gas permeability measuring apparatus ("OX-TRAN2/20" manufactured by Modern Controls, Inc.) under the conditions of 23°C and 80% RH, and the oxygen gas permeability coefficient thereof was determined.

### (Example 1)

### (1) Preparation of PGA-based Resin Composition

With 100 parts by mass of a PGA resin (manufactured by Kureha Corporation, weight average molecular weight: 19×10⁴, melt viscosity (at a temperature of 270°C and a shear rate of 122 sec⁻¹): 600 Pa·s, glass transition temperature: 38°C, melting point: 220°C), 0.03 parts by mass of boron nitride particles ("SCP-1" manufactured by ESK Ceramics, average particle diameter (D50): 0.5 µm) as a nucleating agent and 1 part by mass of a polyester-based thermoplastic elastomer ("Hytrel 3078" manufactured by DU PONT-TORAY CO., LTD., Shore D hardness: 30) as a thermoplastic elastomer were dry blended. The blend was fed to a small biaxial kneader ("TEM-26SS" manufactured by Toshiba Machine Co., Ltd.) in which the temperatures of six sections defined between a feeding unit and a discharging unit were set to 220°C, 250°C, 270°C, 270°C, 250°C, and 240°C, respectively, in this order from the feeding unit, and the temperature of a die was set to 230°C. Then, melt kneading was conducted at a screw rotation speed of 200 rpm, and the kneaded blend was discharged at a discharge rate of 10 kg/h. Thus, a pelletized PGA-based resin composition was obtained. The PGA-based resin composition was dried at 150°C for 3 hours.

### (2) Fabrication of Three-Layer Preform

A bottle preform (hereinafter referred to as "three-layer preform") was fabricated which comprised three layers of polyethylene terephthalate (PET)/PGA/polyethylene terephthalate (PET) (amount of PGA-based resin composition filled: 3% by mass) and had a thickness of 4.0 mm. For the fabrication, the PGA-based resin composition obtained in the above-described (1) was used as a resin for an intermediate layer; polyethylene terephthalate ("CB602S" manufactured by Far Eastern Textile Limited, weight average molecular weight: 2×10⁴, melt viscosity (at a temperature of 290°C and a shear rate of 122 sec⁻¹): 550 Pa·s, glass transition temperature: 75°C, melting point: 249°C) was used as a resin for inner and outer layers; and a co-injection molding machine capable of independently controlling the temperatures of barrels and runners for the layers was used. The temperatures of the barrel and the runner for the intermediate layer were set to 250°C and 245°C, respectively, and the temperatures of the barrels and the runners for the inner and outer layers were all set to 290°C.

### (3) Fabrication of Bottle

The three-layer preform obtained in the above-described (2) was blow molded at 115°C. Thus, a colorless transparent bottle was obtained which comprised three layers of PET/PGA/PET (amount of PGA-based resin composition filled: 3% by mass) and had a thickness of 300 µm. The obtained bottle was measured for haze, and evaluated for resistance to delamination caused by impact according to the above-described methods. Table 1 shows the results.

### (Examples 2 and 3)

PGA-based resin compositions were prepared, and three-layer preforms and bottles were fabricated in the same manner as in Example 1, except that the amounts of the polyester-based thermoplastic elastomer added were changed to 3 parts by mass and 5 parts by mass, respectively, relative to 100 parts by mass of the PGA resin. The bottles were measured for haze, and evaluated for resistance to delamination caused by impact according to the above-described methods. Table 1 shows the results.

### (Examples 4 and 5)

PGA-based resin compositions were prepared, and three-layer preforms and bottles were fabricated in the same manner as in Example 1, except that 3 parts by mass and 5 parts, respectively, by mass of a polyester-based thermoplastic elastomer ("Hytrel 4068" manufactured by DU PONT-TORAY CO., LTD.) having a Shore D hardness of 40 was used instead of the polyester-based thermoplastic elastomer ("Hytrel 3078" manufactured by DU PONT-TORAY CO., LTD.) having a Shore D hardness of 30. The bottles were measured for haze, and evaluated for resistance to delamination caused by impact according to the above-described methods. Table 1 shows the results.

### (Example 6)

A PGA-based resin composition was prepared, and a three-layer preform and a bottle were fabricated in the same manner as in Example 1, except that 5 parts by mass of a polyurethane-based thermoplastic elastomer ("PANDEX T-8195" manufactured by DIC Bayer Polymer Ltd., Shore D hardness: 40) was used instead of the polyester-based thermoplastic elastomer. The bottle was measured for haze, and evaluated for resistance to delamination caused by impact according to the above-described methods. Table 1 shows the results.

### (Example 7)

A PGA-based resin composition was prepared, and a three-layer preform and a bottle were fabricated in the same manner as in Example 3, except that no boron nitride was added. The bottle was measured for haze, and evaluated for resistance to delamination caused by impact according to the above-described methods. Table 1 shows the results.

### (Example 8)

A PGA-based resin composition was prepared in the same manner as in Example 7, except that the amount of the polyester-based thermoplastic elastomer added was changed to 3 parts by mass relative to 100 parts by mass of the PGA resin. A three-layer preform and a bottle were fabricated in the same manner as in Example 1, except that this PGA-based resin composition was used, and the temperatures (molding temperatures) of the barrel and the runner for the intermediate layer were both changed to 250°C in the fabrication of the three-layer preform. The bottle was evaluated for resistance to delamination caused by impact according to the above-described method. Table 1 shows the result.

### (Comparative Example 1)

A PGA-based resin composition was prepared, and a three-layer preform and a bottle were fabricated in the same manner as in Example 1, except that no polyester-based thermoplastic elastomer was mixed. The bottle was measured for haze, and evaluated for resistance to delamination caused by impact according to the above-described methods. Table 1 shows the results.

### (Comparative Example 2)

A PGA-based resin composition was prepared, and a three-layer preform and a bottle were fabricated in the same manner as in Example 1, except that 5 parts by mass of an olefin-based thermoplastic elastomer ("ZELAS 7025" manufactured by Mitsubishi Chemical Corporation, Shore D hardness: 56) was used instead of the polyester-based thermoplastic elastomer. The bottle was measured for haze, and evaluated for resistance to delamination caused by impact according to the above-described methods. Table 1 shows the results.

### (Comparative Example 3)

A PGA-based resin composition was prepared, and a three-layer preform and a bottle were fabricated in the same manner as in Example 1, except that 5 parts by mass of a styrene-based thermoplastic elastomer ("SEPTON 4033" manufactured by KURARAY CO., LTD., Shore D hardness: 26) was used instead of the polyester-based thermoplastic elastomer. The obtained three-layer preform and bottle were visually observed. As a result, spots were observed, which indicated that the styrene-based thermoplastic elastomer was not uniformly dispersed in the PGA. The bottle was measured for haze, and evaluated for resistance to delamination caused by impact according to the above-described methods. Table 1 shows the results.

### (Comparative Example 4)

A three-layer preform and a bottle were fabricated in the same manner as in Example 8, except that no polyester-based thermoplastic elastomer was added. The bottle was evaluated for resistance to delamination caused by impact according to the above-described method. Table 1 shows the result.

**[Table 1]**

| | Thermoplastic elastomer | | | Nucleating agent | | Characteristics of bottle | | |
|---|---|---|---|---|---|---|---|---|
| | Type | Shore D hardness | Amount (parts by mass) | Type | Amount (parts by mass) | Resistance to delamination | | Haze (%) |
| | | | | | | Round hammer | Sharp hammer | |
| Ex. 1 | TPEE | 30 | 1 | BN | 0.03 | 20/20 | 5/20 | 1.2 |
| Ex. 2 | | | 3 | | | 20/20 | 19/20 | 1.2 |
| Ex. 3 | | | 5 | | | 20/20 | 20/20 | 1.6 |
| Ex. 4 | | 40 | 3 | | | 20/20 | 6/20 | 2.3 |
| Ex. 5 | | | 5 | | | 20/20 | 14/20 | 2.8 |
| Ex. 6 | TPUE | 40 | 5 | | | 20/20 | 7/20 | 4.6 |
| Ex. 7 | TPEE | 30 | 5 | - | 0 | 20/20 | 20/20 | 1.4 |
| Ex. 8 | | | 3 | | | 20/20 | - | 1.0 |
| Comp. Ex. 1 | | | 0 | BN | 0.03 | 17/20 | 0/20 | 1.9 |
| Comp. Ex. 2 | TPOE | 56 | 5 | | | 20/20 | - | 93 |
| Comp. Ex. 3 | TPSE | 26 | 5 | | | 20/20 | - | 17 |
| Comp. Ex. 4 | - | - | 0 | - | 0 | 14/20 | - | 0.8 |

| | | | | | | | | |
|---|---|---|---|---|---|---|---|---|
| TPEE: Polyester-based thermoplastic elastomer, TPUE: Polyurethane-based thermoplastic elastomer, TPOE: Olefin-based thermoplastic elastomer, TPSE: Polystyrene-based thermoplastic elastomer BN: Boron nitride -: Not determined | | | | | | | | |

As is apparent from the results shown in Table 1, transparent stretched laminates (bottles) each having a haze of 5 or lower were obtained, when the stretching treatment was performed on the laminates for stretch-forming (three-layer preforms) of the present invention including the PGA-based resin layer containing a predetermined amount of the polyester-based thermoplastic elastomer or the polyurethane-based thermoplastic elastomer as the thermoplastic elastomer (Examples 1 to 8). Moreover, it was found that these stretched laminates were excellent in resistance to delamination caused by impact.

On the other hand, when no thermoplastic elastomer was added (Comparative Example 1), a transparent stretched laminate (bottle) having a haze of 5 or lower was obtained, but the stretched laminate was poor in resistance to delamination caused by impact (especially in resistance to delamination caused by impact applied with the sharp hammer). Meanwhile, when neither the thermoplastic elastomer nor the nucleating agent were added (Comparative Example 4), the resistance to delamination caused by impact applied with the round hammer was also poor. Furthermore, when the olefin-based thermoplastic elastomer was mixed as the thermoplastic elastomer (Comparative Example 2), a transparent laminate for stretch-forming (three-layer preform) was obtained. However, when subjected to the stretching treatment, the laminate for stretch-forming turned white, and a transparent stretched laminate (bottle) was not obtained. When the styrene-based thermoplastic elastomer was mixed as the thermoplastic elastomer (Comparative Example 3), spots having sizes visually detectable were observed in both the laminate for stretch-forming (three-layer preform) and the stretched laminate (bottle), which indicated that the styrene-based thermoplastic elastomer was not uniformly dispersed.

### (Example 9)

A PGA-based resin composition was prepared in the same manner as in Example 7. The PGA-based resin composition and a polyethylene terephthalate ("CB602S" manufactured by Far Eastern Textile Limited) were coextruded. Thus, a multilayer sheet was fabricated which comprised three layers of polyethylene terephthalate (PET)/PGA/polyethylene terephthalate (PET) (the thickness of each layer was 100 µm). Note that, regarding the extrusion temperatures, a cylinder portion of an extruder was divided into four sections, and the temperatures of the sections were set to 230°C, 235°C, 240°C, and 240°C, respectively, for the PGA-based resin composition, and to 240°C, 250°C, 260°C, and 270°C, respectively, for the PET, from the feed side. In addition, the temperature of a die was set to 260°C.

The thus obtained multilayer sheet was subjected to biaxial simultaneous stretching by using a biaxial stretching machine (manufactured by Toyo Seiki Seisaku-sho, Ltd.) under conditions of a stretching temperature of 100°C, a preheating time of 1 min, a stretch rate of 7 m/min, and a stretching ratio of 3 (in the longitudinal direction) × 3 (in the transverse direction). Thus, a multilayer stretched film (stretched laminate) was obtained. The oxygen permeability coefficient of the multilayer stretched film was determined according to the above-described method. Table 2 shows the result.

### (Example 10)

A PGA-based resin composition was prepared, and a multilayer sheet and a multilayer stretched film were fabricated in the same manner as in Example 9, except that the amount of the polyester-based thermoplastic elastomer added was changed to 10 parts by mass relative to 100 parts by mass of the PGA resin. The oxygen permeability coefficient of the multilayer stretched film was determined according to the above-described method. Table 2 shows the result.

### (Comparative Example 5)

A PGA-based resin composition was prepared, and a multilayer sheet and a multilayer stretched film were fabricated in the same manner as in Example 9, except that no polyester-based thermoplastic elastomer was added. The oxygen permeability coefficient of the multilayer stretched film was determined according to the above-described method. Table 2 shows the result.

### (Comparative Example 6)

A PGA-based resin composition was prepared, and a multilayer sheet and a multilayer stretched film were fabricated in the same manner as in Example 9, except that the amount of the polyester-based thermoplastic elastomer added was changed to 20 parts by mass relative to 100 parts by mass of the PGA resin. The oxygen permeability coefficient of the multilayer stretched film was determined according to the above-described method. Table 2 shows the result.

**[Table 2]**

| | Thermoplastic elastomer | | | Nucleating agent | | Oxygen gas permeability coefficient (cm³·cm/cm²·s·cmHg) |
|---|---|---|---|---|---|---|
| | Type | Shore D hardness | Amount (parts by mass) | Type | Amount (parts by mass) | |
| Ex. 9 | TPEE | 30 | 5 | - | 0 | 3.58×10⁻¹⁴ |
| Ex. 10 | | | 10 | | | 4.73×10⁻¹⁴ |
| Comp. Ex. 5 | - | - | 0 | | | 3.53×10⁻¹⁴ |
| Comp. Ex. 6 | TPEE | 30 | 20 | | | 1.03×10⁻¹³ |

| | | | | | | |
|---|---|---|---|---|---|---|
| TPEE: Polyester-based thermoplastic elastomer | | | | | | |

As is apparent from the results shown in Table 2, it was found that when the amount of the thermoplastic elastomer added exceeded 10 parts by mass relative to 100 parts by mass of the PGA resin, the oxygen gas-barrier property of the stretched laminate (multilayer stretched film) deteriorated. Meanwhile, when the amount of the thermoplastic elastomer added was 10 parts by mass or less relative to 100 parts by mass of the PGA resin, the stretched laminate (multilayer stretched film) exhibited high oxygen gas-barrier property. Note that when no thermoplastic elastomer was added, the stretched laminate was poor in resistance to delamination caused by impact, as is apparent from the results shown in Comparative Example 4.

### [Industrial Applicability]

As described above, the present invention makes it possible to obtain a stretched laminate excellent in resistance to delamination caused by impact.

Accordingly, the stretched laminate of the present invention is useful as multilayer films, multilayer sheets, multilayer hollow containers, and the like, because of the excellence in resistance to delamination caused by impact.

## Claims

1. A laminate for stretch-forming, comprising:
a polyglycolic acid-based resin layer containing 100 parts by mass of a polyglycolic acid-based resin and 0.5 parts by mass or more and 10 parts by mass or less of at least one thermoplastic elastomer selected from the group consisting of polyester-based thermoplastic elastomers and polyurethane-based thermoplastic elastomers; and
a thermoplastic resin layer adjacent to the polyglycolic acid-based resin layer.

2. The laminate for stretch-forming according to claim 1, wherein
the thermoplastic elastomer has a Shore D hardness of 60 or less.

3. The laminate for stretch-forming according to claim 1 or 2, wherein
the thermoplastic resin layer is made of at least one resin selected from the group consisting of polyester-based resins, polyolefin-based resins, polystyrene-based resins, polyvinyl chloride-based resins, polyvinylidene chloride-based resins, polyurethane-based resins, ethylene-vinyl alcohol-based resins, (meth)acrylic acid-based resins, nylon-based resins, sulfide-based resins, and polycarbonate-based resins.

4. The laminate for stretch-forming according to any one of claims 1 to 3, wherein the polyglycolic acid-based resin layer and the thermoplastic resin layer are obtained by co-extrusion forming or co-injection forming.

5. The laminate for stretch-forming according to any one of claims 1 to 4, further comprising 0.001 parts by mass or more and 10 parts by mass or less of boron nitride particles relative to 100 parts by mass of the polyglycolic acid-based resin.

6. A stretched laminate, which is obtained by performing a stretching treatment on the laminate for stretch-forming according to any one of claims 1 to 5.
